# EUROPÄISCHE PATENTSCHRIFT

(11) **EP 4 039 551 B1**
(45) Veröffentlichungstag und Bekanntmachung des Hinweises auf die Patenterteilung: **02.08.2023**
(21) Anmeldenummer: 22158938.5
(22) Anmeldetag: 06.03.2017
(51) Int. Cl.: B60T 15/14, B60T 7/04, B60T 8/32, B60T 13/26

(54) **FAHRER-BREMSVENTIL, DRUCKLUFT-BREMSSYSTEM MIT DEM FAHRER-BREMSVENTIL UND VERFAHREN ZUR HERSTELLUNG DES FAHRER-BREMSVENTILS**
DRIVER BRAKE VALVE, COMPRESSED AIR BRAKING SYSTEM WITH THE DRIVER BRAKE VALVE AND METHOD FOR PRODUCING THE DRIVER BRAKE VALVE
CLAPET DE FREIN DE CONDUCTEUR, SYSTÈME DE FREIN PNEUMATIQUE POURVU DE CLAPET DE FREIN DE CONDUCTEUR ET PROCÉDÉ DE FABRICATION DU CLAPET DE FREIN DE CONDUCTEUR

(30) Priorität: 18.04.2016 DE 102016004489
(43) Veröffentlichungstag der Anmeldung: 10.08.2022
(62) Teilanmeldung aus: 17709355.6
(73) Patentinhaber: ZF CV Systems Europe BV, 1170 Brüssel (BE)
(72) Erfinder: GAULKE, Arnd, 30974 Wennigsen (DE); WALLBAUM, Torsten, 31089 Duingen (DE)
(74) Vertreter: Ohlendorf, Henrike

(56) Entgegenhaltungen:
- DE-B3-102012 003 106
- GB-A- 2 489 086
- US-A1- 2015 066 321

## Beschreibung

Die Erfindung betrifft ein Fahrer-Bremsventil, ein Druckluft- Bremssystem mit dem Fahrer-Bremsventil und ein Verfahren zur Herstellung oder zur Kalibrierung des Fahrer-Bremsventils.

Bei Druckluft-Bremssystemen für Nutzfahrzeuge sind unterschiedliche Systeme bekannt, um eine vom Fahrer über sein Bremspedal eingegebene Bremsanforderung zu den Radbremsen weiter zu leiten. Bei analogen Druckluft-Bremssystemen wird durch das Bremspedal über ein Betätigungsglied, zum Beispiel eine durch das Bremspedal verstellte Betätigungs-Stange, ein Fahrer-Bremsventil betätigt, das an einen Vorratsdruck bzw. Systemdruck angeschlossen ist und in Abhängigkeit der Betätigung einen analogen Bremsdruck-Steuerwert über eine Bremsdruck-Steuerleitung zu einem Bremskreis weiterleitet. Somit wird durch die Bremspedal-Betätigung direkt ein analoger Bremsdruck erzeugt, der dann nachfolgend zum Beispiel über Relais-Ventile zur Mengenverstärkung und eine ABS-Ventileinrichtung eines Antiblockiersystems zu den Radbremsen weiter gegeben wird. Derartige Systeme zeichnen sich durch eine hohe Zuverlässigkeit aus. Der von dem Bremsventil ausgesteuerte Bremsdruck kann ergänzend durch einen Drucksensor gemessen werden, damit zum Beispiel der an der ABS- Ventileinrichtung anliegende Fahrer-Bremsdruck (Vorsteuer-Druck) bekannt ist und die Taktung der ABS-Sperrventile in Kenntnis des anliegenden Fahrer- Bremsdrucks erfolgen kann.

Weiterhin sind Fahrerassistenz-Systeme wie zum Beispiel ein ACC (automatic cruise control) zur Abstandsregelung zu einem oder mehreren Vorderfahrzeugen, sowie Systeme zur Vermeidung oder Verringerung der Schwere von Auffahrunfällen durch selbsttätigen Bremseingriff (AEBS) bekannt, die als externe Systeme ein sogenanntes externes Bremsanfrage-Signal oder XBR-Signal an die Brems-Steuereinrichtung ausgeben; aber auch die Brems-Steuereinrichtung selbst kann Bremssystem-interne Steuersignale zur Aktivierung der Radbremsen ausgeben, insbesondere für elektronische Stabilitätsprogramme zur Vermeidung von Fahrzeuginstabilitäten (ESP, ESC) durch selbsttätige, selektive Bremseingriffe (RSC-Bremsungen). Durch eine externes XBR-Signal oder ein Bremssystem-internes Bremssignal wird eine Bremsung an geeigneten Radbremsen angefordert, ohne dass der Fahrer das Bremspedal betätigt. Für eine derartige externe Bremsung (XBR-Bremsung) bzw. interne RSC-Bremsung wird ein Systemdruck oder Vorratsdruck über eine Zuschalt-Ventileinrichtung auf eine Bremsleitung zugeschaltet und zum Beispiel durch die ABS-Ventileinrichtung getaktet oder gepulst an die Radbremsen durchgesteuert, um eine angemessenen Bremswirkung auszubilden. Auch für derartige Fahrerassistenz-Systeme oder deren Bremssystem-seitige Unterstützung ist eine Kenntnis des bei den Fahrer-Bremsungen anliegenden Bremsdrucks hilfreich, damit eine ausreichende Regelgenauigkeit unter anderem auch beim Anbremsen erreicht werden kann sowie bei Umschaltvorgängen abrupte Übergänge von dem bisher anliegenden Fahrer-Bremsdruck vermieden werden können.

Neben analogen Druckluft-Bremssystemen sind weiterhin elektronische Druckluft-Bremssysteme bekannt, bei denen die Pedalbetätigung des Bremspedals durch einen Bremswertgeber elektrisch sensiert wird, ohne hierdurch - wie bei einem Bremsventil - einen analogen Bremsdruck-Steuerwert über einen angeschlossenen pneumatischen Kanal zu den Radbremsen weiter zu leiten. Bei derartigen nicht-analogen, elektronischen Bremssystemen wird somit eine Bremswirkung an den Radbremsen direkt aus einem Systemdruck erzeugt, wobei das Sensorsignal des Bremswertgebers als Soll-Verzögerung bzw. Bremskraft-Anforderung des Fahrers zur Aussteuerung eines Bremsdrucks an den Radbremsen heran gezogen wird. Bei derartigen elektronischen Bremssystemen ist die Zuschaltung von externen Bremsanforderungs-Signalen (XBR-Signalen) relativ einfach, da sie in entsprechender Weise wie eine Fahrer-Bremsanforderung herangezogen werden können, um den Bremsdruck an den Radbremsen auszusteuern. Bei elektronischen Bremssystemen ist jedoch zum Teil aus Sicherheitsgründen die Ausbildung einer pneumatischen Rückfallebene erforderlich.

Die DE 10 2012 003 106 B3 beschreibt ein Verfahren zur Bestimmung eines Bremsdruckwertes anhand von Kennlinien, bei dem einem elektrischen Kanal des Bremsventils bzw. Bremswertgebers ein elektrischer Sensor zugeordnet ist, durch den abhängig von Betätigungen des Bremswertgebers elektrische Signale erzeugt werden, die die erfolgte Betätigung repräsentieren. Hierbei wird zunächst eine erste Kennlinie ermittelt und gespeichert, in der die Abhängigkeit der von dem elektrischen Sensor ausgesteuerten elektrischen Signale vom Grad der Betätigung des Bremswertgebers dargestellt ist, und weiterhin eine zweite Kennlinie, die die Abhängigkeit des von dem pneumatischen Kanal ausgesteuerten Bremsdruckwertes von den elektrischen Signalen des elektrischen Sensors darstellt. Bei einer Bremsanforderung durch Betätigung des Bremswertgebers kann der entsprechende Bremsdruckwert anhand der Kennlinien ermittelt werden.

Bei einem derartigen System kann ohne Verwendung eines Bremsdrucksensors die Bremspedal-Betätigung anhand der in der Brems- Steuereinrichtung gespeicherten Kennlinien als Anforderung eines spezifischen Bremsdrucks bewertet werden, um eine entsprechende Bremsung auszusteuern. Durch den Wegfall eines Bremsdrucksensors zur Ermittlung des ABS-Vordrucks können Kosten bei dennoch hoher Sicherheit eingespart werden.

Der Erfindung liegt die Aufgabe zugrunde, ein Fahrer-Bremsventil für ein Druckluft-Bremssystem, ein derartiges Druckluft-Bremssystem und ein Verfahren zum Herstellen des Fahrer-Bremsventils zu schaffen, die die Ausbildung eines sicheren Druckluft-Bremssystems mit geringen Herstellungs- oder Wartungskosten ermöglichen.

Diese Aufgabe wird durch ein Fahrer-Bremsventil, ein Druckluft-Bremsventil mit dem Fahrer- Bremsventil, und ein Verfahren zum Herstellen des Fahrer-Bremsventils nach den unabhängigen Ansprüchen gelöst. Die Unteransprüche beschreiben bevorzugte Weiterbildungen.

Somit ist bereits in dem Bremsventil eine Kennlinie gespeichert, auf deren Grundlage eine Bremspedal-Betätigung bereits durch eine Ermittlungseinrichtung des Bremsventils bewertet bzw. umgerechnet werden kann. Die mechanische Bremspedal-Betätigung durch den Fahrer geht somit vorzugsweise über die Verstellung eines Betätigungsglieds, z. B. einer Betätigungsstange ein, die durch einen Sensor gemessen wird, der in Abhängigkeit der Betätigung ein elektrisches Betätigungssignal erzeugt. Der Sensor kann zum Beispiel ein Weg-Sensor bzw. Hall-Sensor sein, der ein elektrisches Betätigungssignal erzeugt, das den Stellweg des Betätigungsgliedes wiedergibt.

Das so direkt ermittelte Betätigungssignal wird jedoch nicht direkt als Sensorsignal zu der Brems-Steuereinrichtung ausgegeben, sondern mittels einer Ermittlungseinrichtung und der mindestens einen gespeicherten Kennlinie verarbeitet bzw. umgerechnet, wobei die Kennlinie eine zuvor in einer Kalibrierung ermittelte Druckabhängigkeit des Bremsventils enthält. Somit kann ein Sensorsignal ausgegeben werden, das das spezifische Verhalten genau dieses Bremsventils, z. B. seine Federsteifigkeiten, die tatsächlichen Durchlass-Querschnitte für die Druckluft in Abhängigkeit der Betätigung usw. berücksichtigt.

Die Kennlinie wird hierbei vorteilhafterweise bereits bei der Herstellung des Bremsventils ermittelt, indem in einer Kalibrier-Einrichtung das Betätigungsglied bzw. ein Aktuator der Kalibrier-Einrichtung unterschiedliche Verstellwege anfährt, wobei an den Druckluft-Eingang des Bremsventils ein pneumatischer Systemdruck angeschlossen wird und der durch das Bremsventil bei den verschiedenen Verstellwegen an seinem pneumatischen Kanal ausgesteuerte analoge Druckwert gemessen wird. Somit wird zunächst eine Druck-Stellweg-Kennlinie bzw. Druck-Betätigungssignal-Kennlinie erzeugt, die die Druck-Charakteristik des Bremsventils widergibt bzw. enthält. Diese Daten bzw. eine aus diesen Messungen ermittelte Kennlinie wird dann in einer Speichereinrichtung des Bremsventils als Kennlinie abgespeichert, die somit individuell bzw. spezifisch die Charakteristik dieses Bremsventils wiedergibt.

Auch baugleiche Bremsventile können aufgrund fertigungsbedingter Toleranzen unterschiedliche Kennlinien bzw. Druck-Verstellweg-Kennlinien aufweisen, wobei die Kennlinien insbesondere zueinander verschoben sein können, was bei steileren Kennlinien-Bereichen zu deutlichen Abweichungen führen kann. Indem bereits in dem Bremsventil die kalibrierte Kennlinien-Eigenschaft herangezogen wird, kann somit ein elektrisches Sensorsignal ausgegeben werden, das einheitlich und standardisiert ist. Somit können Bremsventile ohne weiteren Aufwand ausgetauscht werden. Auch ein Austausch des Bremsventils gegen ein bauähnliches Gerät mit gleichartig erfolgter Kalibrierung ist möglich.

Das Bremsventil ist hierbei die Einheit, die durch das Bremspedal bzw. eine Betätigungsstange des Bremspedals angesteuert wird und in Abhängigkeit der Betätigung zum einen einen angeschlossenen Systemdruck, z. B. eines Druckluftspeichers bzw. Vorratsspeichers, als analogen Fahrer-Bremsdruck durchsteuert und zum anderen ein elektrisches Sensorsignal ausgibt, das von der Brems-Steuereinrichtung aufgenommen wird. Somit gehen von dem Bremsventil ein analoger pneumatischer Kanal und ein elektrischer Kanal ab, wobei das elektrische Signal z. B. über einen fahrzeuginternen oder Bremssystem-internen Datenbus (CAN-Bus) an die Brems-Steuereinrichtung übermittelt werden kann, oder z.B. als pulsweitenmoduliertes elektrisches Signal.

Anders als zum Beispiel in der DE 10 2012 003 106 B3 wird die Kennlinie nicht in der Brems-Steuereinrichtung bzw. einer angeschlossenen Speichereinheit, sondern bereits in dem Bremsventil gespeichert, das in dem Druckluft-Bremssystem pneumatisch und elektrisch angeschlossen wird. Somit wird der Vorteil einer höheren Variabilität und Möglichkeit eines Austausches einzelner Komponenten erreicht; auch unterschiedliche, prinzipiell bauähnliche Bremsventile können direkt in einem Bremssystem eingesetzt werden, ohne dass hierzu zum Beispiel eine Speichereinrichtung der Steuereinrichtung zunächst entsprechend zu programmieren ist.

Die Kalibrierung kann insbesondere noch während der Produktion bzw. am Ende der Produktion des Bremsventils erfolgen während der finalen Dichtigkeits- und Funktionsprüfung. Das Bremsventil wird ohnehin bei der End-Überprüfung zum Beispiel auf Dichtigkeit und Druckcharakteristik überprüft, wobei es mit seinem Druckluft-Eingang an einen Systemdruck angeschlossen wird und die Dichtigkeit seines Druckluft-Eingangs und Druckluft-Ausgangs überprüft wird. Anschließend oder während dieser Prüfung kann die Kalibrierung erfolgen, indem durch zum Beispiel einen Aktuator eine Reihe von Betätigungswegen (Stellwegen) abgefahren wird und der am Druckausgang ausgegebene, ausgesteuerte analoge pneumatische Druckwert von einem Drucksensor ermittelt. Somit erfolgt eine druckorientierte Kalibrierung des Bremsventils mit geringem Aufwand, individuell und spezifisch für das Bremsventil, dessen interne Speichereinrichtung nachfolgend mit den Kennlinien-Daten für die spätere Umrechnung programmiert werden kann.

Gemäß einer Ausführungsform wird die Möglichkeit einer redundanten Messung geschaffen, indem das Bremsventil zwei unabhängig voneinander vorgesehene und Messungen durchführende Wegsensoren aufweist, die jeweils den Verstellweg des Betätigungsgliedes separat messen, wobei deren Betätigungssignale aufgrund ihrer individuellen Kennlinien nachfolgend verarbeitet werden können, sodass zwei Sensorsignale ausgegeben werden, das heißt dass das Bremsventil zwei elektrische Kanäle zu der Brems- Steuereinrichtung aufweist. Auch bei Ausfall oder Störungen eines elektrischen Kanals bzw. eines Sensors wird somit eine Redundanz durch den weiteren Sensor und den weiteren elektrischen Kanal geschaffen, ohne das zum Beispiel ein Drucksensor erforderlich ist.

Erfindungsgemäß kann somit auch eine hohe Genauigkeit des abgeleiteten, vom Fahrer verursachten Ventilausgangsdrucks erreicht werden.

Die Erfindung wird im Folgenden anhand der beiliegenden Zeichnungen an einigen Ausführungsformen näher erläutert. Es zeigen:
- Fig. 1: ein elektropneumatisches Schaltschema eines Druckluft-Bremssystems gemäß einer Ausführungsform;
- Fig. 2: eine vergrößerte Darstellung des Bremsventils aus Fig. 1;
- Fig. 3: ein Diagramm des ausgesteuerten Bremsdrucks zweier Bremsventile gleicher Bauart in dem Bremssystem der Figur 1, in Abhängigkeit eines Betätigungsweges des Bremspedals;
- Fig. 4: Diagramme der elektrischen Ausgangssignale der beiden Bremsventile in Abhängigkeit des Betätigungsweges;
- Fig. 5: ein Diagramm mit den aus Figur 2 und 3 abgeleiteten Abhängigkeiten des Bremsdrucks von den elektrischen Sensorsignalen der beiden Bremsventile aus Figur 2 und 3;
- Fig. 6: eine Anordnung zur Kalibrierung eines Bremsventils aus Fig. 2;
- Fig. 7: ein Flussdiagramm eines Kalibrier-Verfahrens gemäß einer Ausführungsform der Erfindung.

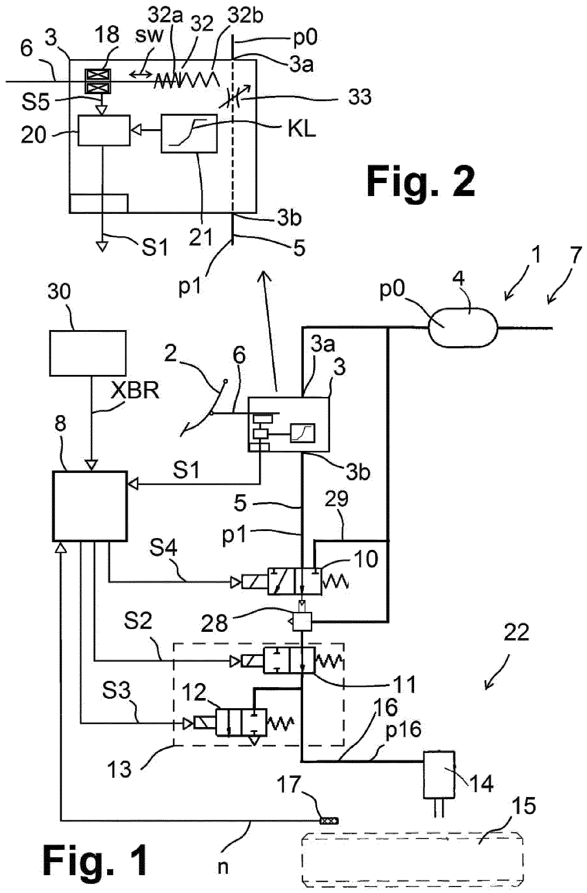

Ein Druckluft-Bremssystem 1 eines Nutzfahrzeugs 7 ist in Figur 1 mit einem Bremskreis 22 gezeigt; im Allgemeinen sind mehrere Bremskreise 22 vorgesehen. Der Fahrer betätigt ein Bremspedal 2 und hierdurch ein Bremsventil 3, das Druckluft mit einem Systemdruck p0 von einem ersten Druckluft-Vorratsspeicher 4 über seinen Druckluft-Eingang 3a aufnimmt und über seinen Druckluft-Ausgang 3b auf eine Bremsdruck-Steuerleitung 5 durchsteuert. Somit wird in Abhängigkeit der Betätigung des Bremspedals 2 durch das Bremsventil 3 ein analoger Fahrer-Bremsdruck p1 auf die Bremsdruck-Steuerleitung 5 gelegt. Der analoge Fahrer-Bremsdruck p1 wird gemäß der gezeigten Ausführungsform über eine in der Grundstellung offene Zuschalt-Ventileinrichtung 10, die hier als ein einziges Zuschaltventil 10, und zwar als 3/2-Wege-Solenoidventil ausgebildet ist, dem Bremskreis 22 zugeführt. Das Zuschaltventil 10 dient der wahlweisen Zuschaltung einer Fahrerassistenz-Funktion in Abhängigkeit eines externen Bremsanforderungssignals XBR oder z.B. internen Bremsanforderungssignals RSC, wie weiter unten beschrieben wird.

In dem Bremskreis 22 ist eine ABS-Ventileinrichtung 13 mit einem ABS-Einlassventil 11 und einem ABS-Auslassventil 12 vorgesehen, an die sich nachfolgend eine Bremsleitung 16 mit einer an einem Fahrzeugrad 15 vorgesehenen Radbremse 14 anschließt.

Eine Brems-Steuereinrichtung 8 (ABS-Steuereinrichtung) nimmt Raddrehzahlsignale n der an den Fahrzeugrädern 15 vorgesehenen Raddrehzahl-Sensoren 17 auf und gibt Steuersignale S2 und S3 als ABS- Steuersignale an die ABS-Ventileinrichtung 13 für eine Bremsschlupf-Regelung aus, mit den bekannten Phasen, den Bremsdruck p16 in der Bremsleitung 16 zu halten, zu senken oder zu erhöhen, wie es als solches bekannt ist.

Das Bremsventil 3 weist somit die Bremsdruck-Steuerleitung 5 als pneumatischen Ausgangs-Kanal auf; weiterhin weist das Bremsventil 3 als elektrischen Ausgangs-Kanal ein Sensornutzsignal S1 auf, das von dem Bremsventil 3 zu der Brems-Steuereinrichtung 8 ausgegeben wird. Hierzu weist das Bremsventil 3 gemäß der Detailvergrößerung der Figur 2 als Betätigungselement oder Betätigungsglied eine vom Bremspedal 2 um einen Stellweg sw verstellbare Betätigungsstange 6 auf, durch die - in an sich bekannter Weise - zum Beispiel ein Durchlass-Querschnitt 33 des Bremsventils 3 zur Ausgabe des analogen Fahrer-Bremsdrucks p1 auf die Bremsdruck-Steuerleitung 5 eingestellt wird. An der Betätigungsstange 6 ist ein Wegsensor 18, z. B. ein Hall-Sensor, zur Sensierung des Stellweges sw angeordnet.

Der Wegsensor 18 erzeugt in Abhängigkeit des Stellwegs sw ein Betätigungssignal S5 und gibt es an eine Ermittlungseinrichtung 20 aus, die auf Grundlage einer in einem Speicher 21 des Bremsventils 3 gespeicherten Kennlinie KL aus dem Betätigungssignal S5 das Sensornutzsignal S1 bildet, das z. B. als PWM-Signal oder Dateninhalt auf einem CAN-Bus ausgelegt ist, und an die Brems-Steuereinrichtung 8 ausgegeben wird.

Die Brems-Steuereinrichtung 8 ermittelt aus dem Sensornutzsignal S1 direkt den Fahrer-Bremsdruck p1.

Der Fahrer-Bremsdruck p1 kann bei offenem Zuschaltventil 10 und offenem Einlassventil 11 der ABS-Ventileinrichtung 13 direkt zu der Radbremse 14 geführt werden. Weiterhin können - in hier nicht gezeigter, aber bekannter Weise - zusätzliche Ventileinrichtungen, zum Beispiel für eine Achslastverteilung (ALB-Ventileinrichtung), vorgesehen sein.

Von einer externen Fahrerassistenz-Steuereinrichtung 30 kann zum Beispiel über den CAN-Bus ein externes Bremsanforderungs-Signal XBR an die Brems-Steuereinrichtung 8 ausgegeben werden, woraufhin diese ein Zuschaltsignal S4 zum Umschalten des Zuschaltventils 10 ausgibt, das z. B. den Druckluft-Vorratsspeicher 4 oder auch einen anderen Druckluft-Vorratsspeicher mit dem Systemdruck p0 über eine Versorgungsleitung 29 an den Bremskreis 22 mit der ABS-Ventileinrichtung 13 legt. Die Brems-Steuereinrichtung 8 taktet über die Steuersignale S2, S3 die ABS-Ventileinrichtung 13 derartig, dass aus dem Systemdruck p0 der für die Fahrerassistenz-Funktion einzustellende analoge Betriebsbremsdruck p16 in der Bremsleitung 16 zu der Radbremse 14 eingestellt wird.

Eine genaue Kenntnis des vom Fahrer ausgesteuerten analogen Fahrer-Bremsdrucks p1 in der Brems-Steuerleitung 5 ist insbesondere für die ABS-Regelung, aber auch für die Einleitung einer derartigen fahrerunabhängigen externen (XBR) oder fahrerunabhängigen internen (RSC)-Bremsung wichtig, da das Bremssystem einen Zusammenhang zwischen Druckausteuerung und Fahrzeugreaktion (Verzögerung) bereits beim Anbremsen zur Erreichung einer genauen Umsetzung des Bremswunsches heranzieht, welcher aus Fahrerbremsungen ableitbar ist, und weiterhin an dem Zuschaltventil 10 zwischen dem Fahrer-Bremsdrucks p1 und dem Systemdruck p0 umgeschaltet wird und daher erhebliche Druckunterschiede vorliegen können. Die Brems-Steuereinrichtung 8 sollte daher den vorliegenden Fahrer-Bremsdrucks p1 berücksichtigen, da sonst beim Umschalten ruckartige Bremseingriffe auftreten können, die zu Instabilitäten des Fahrzeugs 7 führen können. Hierzu nimmt die Brems-Steuereinrichtung 8 das Sensornutzsignal S1 von dem Bremsventil 3 auf.

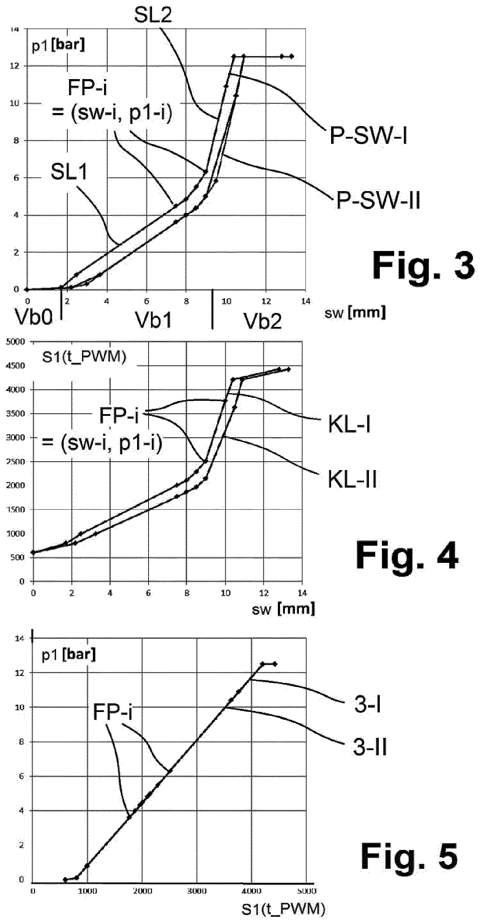

Nachfolgend wird die Ermittlung und Verarbeitung des Betätigungssignals S5 zu dem Sensornutzsignal S1 und die Verwendung in der Brems-Steuereinrichtung 8 detaillierter mit Bezug zu den Diagrammen der Figuren 3, 4 und 5 erläutert, in denen jeweils Kennlinien von zwei grundsätzlich baugleichen, aber aufgrund fertigungsbedingter Toleranzen etwas unterschiedlichen Bremsventilen 3, d.h. einem ersten Bremsventil 3-I und einem zweiten Bremsventil 3-II gezeigt sind; entsprechend sind die jeweiligen Kennlinien mit -I und -II gekennzeichnet.

In Figur 3 ist der Fahrer-Bremsdruck p1, beispielsweise in Bar, gegenüber dem durch das Betätigungssignal S5 angezeigten Stellweg sw, z. B. in mm, gezeigt. Es ergibt sich eine Druck-Weg-Kennlinie P-SW, die für die beiden Bremsventile als P-SW-I und P-SW-II gezeigt ist.

In dem Bremsventil 3 wird durch die Betätigungsstange 6 zum Beispiel über eine Federeinrichtung 32 mit zwei Federn 32a, 32b mit unterschiedlicher Feder- Charakteristik eine Ventilklappe zum Öffnen des Durchlass-Querschnitts betätigt. Durch diese spezifische Feder-Ausbildung wird eine Öffnungs-Charakteristik als sogenannte "Feeling-Kurve" festgelegt, bei der kleine Betätigungen und somit Stellwege sw in einem Anfangs- Verstellbereich Vb0 von sw0-sw1 zunächst noch nicht zu einer Öffnung der Ventilklappe führen, das heißt es liegt ein Fahrer-Bremsdruck p1=0 vor. In einem nachfolgendem ersten Verstellbereich Vb1 wird eine erste Federsteifigkeit der ersten Feder 32a als z. B. geringere erste Steigung SL1 relevant, und nachfolgend in einem zweiten Verstellbereich Vb2 von sw1 bis sw2 eine zweite Federsteifigkeit SL2 der zweiten Feder 32b als zweite Steigung.

Somit wird zunächst eine allmähliche Druckerhöhung, und dann bei stärkerer Betätigung eine deutlichere Druckerhöhung ermöglicht. Derartige Feeling-Kurven werden für einen Fahrer als angenehm empfunden.

Zur Definition der in Fig. 3 gezeigten Druck-Weg-Kennlinien P-SW sind hier Fixpunkte Fp-i mit i= 1, 2, 3, ... als Wert-Paare aus einem Druckwert p1 und einem Wert des Stellwegs sw vorgesehen, zwischen denen die Kurve dann interpoliert wird. Die Fixpunkte Fp-i dienen dazu, charakteristische Bereiche der Kennlinie festzulegen:
Der Fixpunkt Fp-1 liegt hier zunächst bei sw=0 und somit p1=0, entsprechend keiner Bremspedal-Betätigung.

Der nachfolgende Fixpunkt Fp-2 kann zum Beispiel bei einem Betätigungsweg sw-2 vorliegen, bei dem ein erster Druckanstieg erfolgt, wobei hier zum Beispiel ein Druck von p1 kleiner/gleich 0,1 bar vorliegt. In Punkt Fp-3 mit zum Beispiel einem Stellweg sw-3 liegt zum Beispiel ein Druck von p1=0,8 bar vor; nachfolgend werden dann bei dem Übergang der linearen Abschnitte der Feder-Kennlinien mehrere Fixpunkte gesetzt, sodass die Druck-Weg-Kennlinie P-SW durch einen Linien-Zug oder Strecken-Zug aus mehreren Abschnitten gebildet wird, wobei hier zum Beispiel zwischen Fp-2 und Fp-3 ein längerer gerader Abschnitt, nachfolgend ein Übergang und zwischen Fp-6 und Fp-7 ein weiterer gerader Abschnitt der zweiten Feder festgelegt ist. Bei Fp-9 ist bereits eine volle Bremsbetätigung erreicht, sodass die weitere Betätigung auf Fp-10 zu keiner weiteren Erhöhung des Fahrer-bremsdrucks p1 führt. Bei Fp-10 ist dann eine maximale Betätigung des Bremspedals 2 erreicht, das heißt das Bremspedal 2 ist vollständig betätigt.

Die Druck-Weg-Kennlinie KL kann somit zum Beispiel als Tupel von Fixpunkten Fp-i, jeweils als Werte-Paare (p, sw) sind, definiert sein.

Fig. 4 zeigt die von der Ermittlungseinrichtung 20 herangezogene Ventil-Kennlinie KL, d.h. wiederum die beiden Ventil-Kennlinien KL-I und KL-II für die beiden baugleichen Bremsventile 3. Die Ventil-Kennlinie KL kann in der Speichereinrichtung 21 gespeichert sein; grundsätzlich kann aber auch die Druck-Weg-Kennlinie P-SW in der Speichereinrichtung 21 gespeichert werden, so dass die Ermittlungseinrichtung 20 auf deren Grundlage das Sensornutzsignal S1 ermittelt; relevant ist, dass die Ermittlungseinrichtung 20 das Sensornutzsignal S1 erzeugt und ausgibt.

Gemäß Fig. 4 wird somit auch für das Sensornutzsignal S1, das als PWM-Signal mit einer Signalbreite t_PWM oder über einen CAN-Bus ausgegeben wird, eine Abhängigkeit von dem durch das Betätigungssignal S5 angezeigten Stellweg sw ermittelt, die die Ventil-Kennlinie KL darstellt. Die Ventil-Kennlinie KL kann somit in der Speichereinrichtung 21 gespeichert werden.

Bei einer Betätigung des Bremspedals 2 wird somit in dem Bremsventil 3 zunächst von dem Wegsensor 18 ein Betätigungssignal S5 erzeugt, aus dem dann von der Ermittlungseinrichtung 20 auf Grundlage der gespeicherten Kennlinie KL (oder P-SW) das Sensornutzsignal S1 ermittelt und an die Brems-Steuereinrichtung 8 ausgegeben wird.

Gemäß Fig. 5 zeigt das Sensornutzsignal S1 hierbei für beide Bremsventile 3-I und 3-II eine lineare Abhängigkeit, wobei sich die Funktionen p1(S1) nach Fig. 5 auch decken, d.h. identisch sind, auch wenn die Fixpunkte der Kennlinien P-SW-I, P-SW-II und entsprechend KL-I und KL-II verschieden sind. Somit kann durch die Brems-Steuereinrichtung 8 für jedes eingesetzte Bremsventil 3 ein einheitliches, identisches Sensornutzsignal S1 verwendet werden; die spezifischen Toleranzen und Ungleichheiten können somit erfindungsgemäß durch die gespeicherten Kennlinien bereits in dem Bremsventil 3 berücksichtigt und kompensiert werden. Auch ein Austausch eines Bremsventils 3 führt - ohne Umprogrammierung der Brems-Steuereinrichtung 8 - zu keiner Änderung des Bremsverhaltens.

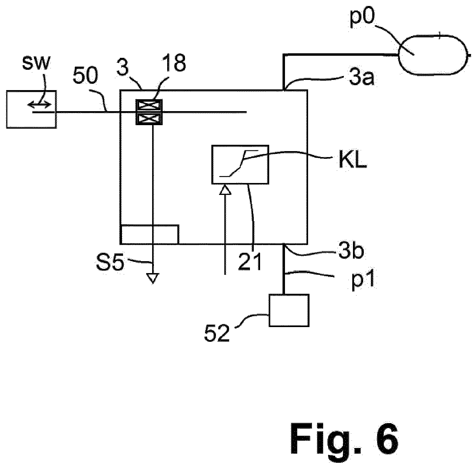

Die Kennlinie KL oder P-SW wird gemäß Figur 6 in einem Kalibrier-Prozess bzw. Kalibrier-Verfahren ermittelt, das bereits in der Fertigung des Bremsventils 3, insbesondere End-of-Line bei einer Abschlussprüfung durchgeführt wird. Bei der Abschlussprüfung werden die Bremsventile 3 zunächst in üblicher Weise einer Prüfung auf Dichtigkeit usw. unterzogen, wozu sie gemäß Fig. 6 mit ihrem Druckluft-Eingang 3a an einen Vorratsdruck p0 angeschlossen wird und an ihren Druckluft-Ausgang 3b ein Drucksensor 52 angeschlossen wird. Weiterhin wird zur Kalibrierung ein Aktuator 50 entsprechend der Betätigungs-Stange 6 eingesetzt, der definiert verstellt wird, wobei das von dem Wegsensor 18 erzeugte Betätigungssignal S5 aufgenommen wird. Hierbei werden durch den Stellweg sw des Betätigungssignals S5 die Fixpunkte Fp1 bis Fp10 der Figur 1 abgefahren, und über den Drucksensor 52 der durchgesteuerte Fahrer-Bremsdruck p1 gemessen.

Somit kann direkt die Druck-Weg-Kennlinie P-SW oder die Bremsventil-Kennlinie KL ermittelt und in der Speichereinheit 21 nicht-flüchtig gespeichert werden. Hierdurch erfolgt eine druckorientierte Kalibrierung.

Gemäß einer Weiterbildung können zwei Wegsensoren 18 in einem Bremsventil 3 vorgesehen sein, um eine Redundanz zu erzeugen. Somit können die Figuren 3, 4, 5 auch dahingehend gewertet werden, dass die beiden Druck-Weg-Kennlinien P-SW-I, P-SW-II bzw. die beiden Bremsventil-Kennlinien KL-I und KI-II jeweils zwei gleichartig kalibrierte Wegsensoren 18-I und 18-II darstellen, die in einem einzigen Bremsventil 3 vorgesehen sind und gemäß Fig. 5 eine Redundanz, d.h. gleiche Messergebnisse liefern. Hierbei können in dem Kalibrier-Prozess beide Wegsensoren 18-I und 18-li gleichzeitig bzw. parallel vermessen werden, sodass auch sichergestellt ist, dass ihre Kennlinien bei genau gleichen Druckwerten des später auszusteuernden Fahrer- Bremsdrucks p1 kalibriert sind.

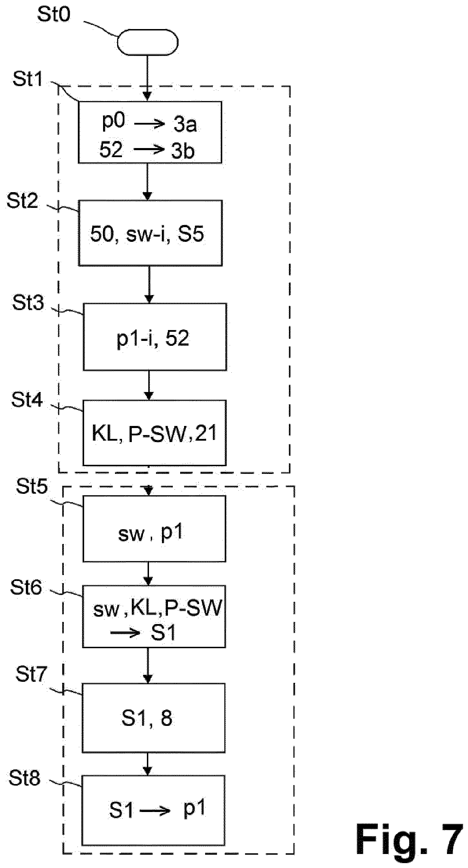

Somit wird in dem Herstellungs-Prozess der Figur 7 nach dem Start in Schritt St0 nachfolgend gemäß Schritt St1 der Vorratsspeicher 4 bzw. ein Systemdruck p0 an den Druckluft-Eingang 3a angeschlossen, und an den Druckluft-Ausgang 3b der Drucksensor 52 angeschlossen; dieser Schritt kann Teil der vorhergehenden Dichtigkeitsprüfung sein.

Nachfolgend wird in Schritt St2 der Aktuator 50 aktiviert und verschiedene Stellwege sw eingestellt, die jeweils als Betätigungssignal S5 gemessen werden, entsprechend den Fixpunkten Fp1-Fp10 sukzessive verstellt. In Schritt St3 wird somit - gleichzeitig mit dem Schritt St2, jeweils in den eingestellten Stellwegen sw-1 bis sw-1 0 der jeweilige Druckwert p1-1 bis p1-10 von dem Drucksensor 52 gemessen, wobei eine Messvorrichtungs- Steuereinrichtung diese Messwerte aufnimmt, und nachfolgend in Schritt St4 die Kennlinie KL oder P-SW z. B. als Werte-Tupel der Fixpunkte Fp-i bildet und in der Speichereinrichtung 21 abspeichert.

Der Kalibrier-Prozess erfolgt somit in Schritt St1 bis St4 einmalig bei der Herstellung und Kalibrierung des Bremsventils 3. Er kann grundsätzlich nachher erneuert werden; dies ist jedoch nicht erforderlich. Nach der Herstellung wird im Betrieb bei einer Betätigung des Bremspedals 2 somit
- gemäß Schritt St5 zum einen der analoge Fahrer-Bremsdruck p1 durchgesteuert und weiterhin ein Stellweg sw als Betätigungssignal S5 ermittelt,
- gemäß Schritt St6 von der Ermittlungseinrichtung 20 aufgrund der Kennlinie KL oder P-SW und des Stellweges sw das Sensornutzsignal S1 ermittelt,
- in Schritt St7 das Sensornutzsignal S1 ausgegeben an die Brems-Steuereinrichtung 8,
- wobei die Brems-Steuereinrichtung 8 nachfolgend in Schritt St8 aus dem Sensornutzsignal S1 direkt und linear den Fahrer-Bremsdruck p1 entnehmen und zur Ausgabe der Steuersignale S2, S3 und ggf. S4 heranziehen kann.

### Bezugszeichenliste

- 1: Druckluft-Bremssystem
- 2: Bremspedal
- 3: Fahrer-Bremsventil
- 3a: Druckluft-Eingang
- 3b: Druckluft-Ausgang
- 4: erster Druckluft-Vorratsspeicher
- 5: Bremsdruck-Steuerleitung
- 6: Betätigungsstange des Bremspedals 2
- 7: Fahrzeug, insbesondere Nutzfahrzeug
- 8: Brems-Steuereinrichtung (Steuereinrichtung des Bremssystems)
- 10: Zuschaltventil
- 11, 12: ABS-Sperrventile
- 11: ABS-Einlassventil
- 12: ABS-Auslassventil
- 13: ABS-Ventileinrichtung, mit ABS-Einlassventil 11 und ABS-Auslassventil12
- 14: Radbremse
- 15: Fahrzeugrad
- 16: Bremsleitung
- 17: Raddrehzahl-Sensor
- 18: Wegsensor
- 20: Ermittlungseinrichtung
- 21: Kennlinien-Speicher
- 22: Bremskreis
- 28: Relaisventil
- 29: Versorgungsleitung
- 30: externe Fahrerassistenz-Steuereinrichtung
- 32: Federeinrichtung im Fahrer-Bremsventil 3
- 32a: erste Feder
- 32b: zweite Feder
- 33: Durchlassquerschnitt

- 50: Aktuator
- 52: Drucksensor

- n: Raddrehzahlsignal

- p0: Systemdruck
- p1: analoger Fahrer-Bremsdruck in der Brems-Steuerleitung 5
- p1-i: Fahrer-Bremsdruck-Werte
- p16: analoger Betriebsbremsdruck in der Bremsleitung 16

- S1: Sensornutzsignal
- S2, S3: Steuersignale an die ABS-Sperrventile 11, 12
- S4: Zuschalt-Signal
- S5: Betätigungssignal

- sw: Stellweg
- sw-i: Stellweg-Werte

- Fp-i: Fixpunkte als Zahlentupel aus sw-i, p1-i

- P-SW: Druck-Weg-Kennlinie
- P-SW-I: erste Druck-Weg-Kennlinie
- P-SW-II: zweite Druck-Weg-Kennlinie
- KL: Bremsventil-Kennlinie
- KL-I: erste Bremsventil-Kennlinie
- KI-II: zweite Bremsventil-Kennlinie

- Vb0: Anfangs- Verstellbereich
- Vb1: erster Verstellbereich
- Vb2: zweiter Verstellbereich
- SL1: erste Federsteifigkeit als erste Steigung
- SL2: zweite Federsteifigkeit als zweite Steigung

- PWM: Pulsweitenmodulation
- XBR: externes Bremsanforderungs-Signal (eXternal Brake Request)
- RSC: internes, Fahrer-unabhängiges Bremsanforderungs-Signal (Roll Stability Control)
- St0-St8: Schritte des Verfahrens, dabei
- St1 - St4: Schritte des Kalibrierverfahrens,
- St5 - St8: Schritte des Bremsverfahrens

## Patentansprüche

1. Fahrer-Bremsventil (3) für ein Druckluft-Bremssystem (1) eines Nutzfahrzeugs (7),
wobei das Fahrer-Bremsventil (3) durch ein Bremspedal (2) ansteuerbar und zur Ausgabe eines analogen Fahrer-Bremsdrucks (p1) und eines elektrischen Sensornutzsignals (S1) in Abhängigkeit der Betätigung des Bremspedals (2) vorgesehen ist,
wobei das Fahrer-Bremsventil (3) einen Druckluft-Eingang (3a) zum Anschluss an einen Systemdruck (p0), einen Druckluft-Ausgang (3b) zum Anschluss einer Brems-Steuerleitung (5), und einen Sensor (18) zur Ermittlung einer Betätigung des Bremspedals (2) aufweist,
**dadurch gekennzeichnet, dass**
- das Bremsventil (3) eine Kennlinien-Speichereinrichtung (21) mit gespeicherten Kennlinien-Daten (KL) und eine Ermittlungseinrichtung (20) aufweist,
- der Sensor (18) zum Erzeugen eines Betätigungssignals (S5) in Abhängigkeit der Betätigung des Bremspedals (2) ausgebildet ist,
- die Ermittlungseinrichtung (20) ausgebildet ist zum Erzeugen des Sensornutzsignals (S1) aus dem Betätigungssignal (S5) in Abhängigkeit der in dem Kennlinien-Speicher (21) gespeicherten Kennlinien-Daten (KL), und
- die gespeicherten Kennlinien-Daten (KL, P-SW) und/oder das Sensornutzsignal (S1) einen nicht-linearen Zusammenhang eines ausgesteuerten Fahrer-Bremsdrucks (p1) und/oder Signalwerts (t_PWM) von einem Stellweg (sw) des Bremspedals (2) aufweisen.

2. Fahrer-Bremsventil (3) nach Anspruch 1, **dadurch gekennzeichnet, dass** die Ermittlungseinrichtung (20) ausgebildet ist zur Erzeugung und Ausgabe des Sensornutzsignals (S1) als lineare Abhängigkeit des Fahrer-Bremsdrucks (p1) von dem Stellweg (sw).

3. Fahrer-Bremsventil (3) nach Anspruch 1 oder 2, **dadurch gekennzeichnet, dass** das Sensornutzsignal (S1) eine Abhängigkeit des vom Bremsventil (3) ausgegebenen Fahrer-Bremsdrucks (p1) von dem Stellweg (sw) des Bremspedals (2) wiedergibt.

4. Fahrer-Bremsventil (3) nach einem der vorherigen Ansprüche, **dadurch gekennzeichnet, dass** die in dem Kennlinien-Speicher (21) gespeicherten Kennlinien-Daten (KL, P-SW) durch Kalibrierung des Bremsventils (3) und Messung des ausgegebenen Fahrer-Bremsdrucks (p1) gebildet sind.

5. Fahrer-Bremsventil (3) nach einem der vorherigen Ansprüche, **dadurch gekennzeichnet, dass** das Sensornutzsignal (S1) ein PWM-Signal (PWM) ist, wobei eine Pulsbreite (t_PWM) des PWM-Signals (PWM) proportional zum ausgesteuerten Fahrer-Bremsdruck (p1) ist.

6. Fahrer-Bremsventil (3) nach einem der vorherigen Ansprüche, **dadurch gekennzeichnet, dass** die Kennlinien-Daten (KL, P-SW) mindestens zwei lineare Bereiche (Vb1, Vb2) mit unterschiedlichen Steigungen (SL1, SL2) aufweisen, die den Federsteifigkeiten zweier Federn (32a, 32b) einer Feder-Einrichtung (32) des Fahrer-Bremsventils (3) oder des Bremspedals (2) zugeordnet sind oder eine nicht-lineare Federkennlinie abschnittsweise linear nachbilden.

7. Fahrer-Bremsventil (3) nach einem der vorherigen Ansprüche, **dadurch gekennzeichnet, dass** die Kennlinien-Daten (KL) Fixpunkte (FP-i) als Werte-Tupel, z. B. Werte-Paare aufweisen, zur Interpolation der Kennlinie (Kl) und/oder zur Interpolation von Fixpunkten (FP-i).

8. Fahrer-Bremsventil (3) nach einem der vorherigen Ansprüche, **dadurch gekennzeichnet, dass** der Sensor (18) ein Wegsensor, insbesondere ein Hall-Sensor (18) zur Ermittlung des Stellweges (sw) einer mit dem Bremspedal (2) verbundenen oder aktivierten Betätigungs- Einrichtung (6) zur Einstellung eines Durchlass-Querschnittes (33) des Fahrer-Bremsventils (3) ist.

9. Druckluft-Bremssystem (1) für ein Nutzfahrzeug (7), das aufweist:
- ein Bremspedal (2),
- ein durch das Bremspedal (2) ansteuerbares Fahrer-Bremsventil (3) nach einem der vorherigen Ansprüche,
- mindestens einen Bremskreis (22) mit mindestens einer Radbremse (14) und einer Sperrventileinrichtung (11, 12),
- eine Bremsdruck-Steuerleitung (5) zum Leiten oder Führen des analogen Fahrer-Bremsdrucks (p1) zu dem Bremskreis (22), und
- eine Brems-Steuereinrichtung (8) zur Aufnahme des Sensornutzsignals (S1) und Ausgabe von Steuersignalen (S2, S3).

10. Druckluft-Bremssystem (1) nach Anspruch 9, **dadurch gekennzeichnet, dass** zwischen der Bremsdruck-Steuerleitung (5) und dem Bremskreis (22) eine Zuschalt-Einrichtung (10) vorgesehen ist, die alternativ die Bremsdruck-Steuerleitung (5) oder einen Systemdruck (p0) an den Bremskreis (22) schaltet,
wobei die Zuschalteinrichtung (10) durch ein Zuschaltsignal (S4) von der Brems-Steuereinrichtung (8) in Abhängigkeit eines fahrerunabhängigen externen oder internen Bremsanforderungs-Signals (XBR, RSC) ansteuerbar ist.

11. Verfahren zum Herstellen eines Fahrer-Bremsventils (3) nach einem der Ansprüche 1 bis 8, mit mindestens folgenden Schritten:
Anschließen eines Systemdrucks (p0) an einen Druckluft-Eingang (3a) des Fahrer-Bremsventils (3) und eines Druckluft-Sensors (52) an einen Druckluft-Ausgang (3b) des Fahrer-Bremsventils (3) (St1), **gekennzeichnet durch**
sukzessives Verstellen eines Aktuators (50) (St2) und Messen zum einen der mehreren Einstellwerte (Sw-i) des Stellwegs (sw) als Betätigungssignals (S5) des Sensors (18) und zum anderen der von dem Fahrer-Bremsventil (3) bei den Einstellwerte (Sw-i) des Stellwegs (sw) an dem Druckluft-Ausgang (3b) ausgegebenen Fahrer-Bremsdruck-Werte (p1-i) des Fahrer- Bremsdrucks (p1) durch den Drucksensor (52) (St3),
Bilden einer Kennlinie (KL, P-SW) aus den Einstellwerten (Sw-i) und Druckwerten (p1-i) und Abspeichern der Kennlinie (KL, P-SW) in dem Kennlinien-Speicher (21) des Bremsventils (3) (St4).

12. Verfahren nach Anspruch 11, **dadurch gekennzeichnet, dass** die Kennlinie als Fixpunkte (FP-i) abgespeichert wird, die als oder aus Werte-Tupeln der Einstellwerte (Sw-i) des Stellwegs (sw) und der Fahrer-Bremsdruck-Werte (p1-i) des Fahrer-Bremsdrucks (p1) gebildet sind (St4).

13. Verfahren nach Anspruch 11 oder 12, **dadurch gekennzeichnet, dass** das Anschließen eines Systemdrucks (p0) an den Druckluft-Eingang (3a) des Fahrer-Bremsventils (3) und des Druckluft-Sensors (52) an einen Druckluft-Ausgang (3b) des Fahrer-Bremsventils (3) vor oder als Teil einer Dichtigkeitsprüfung nach der Herstellung des Fahrer-Bremsventils (3) erfolgt (St1) und
nachfolgend die weiteren Schritte (St2, St3, St4) des sukzessives Verstellens eines Aktuators (50) (St2), des Messens (St3) und des Bildens und Abspeicherns der Kennlinie (KL, P-SW) in dem Kennlinien-Speicher (21) des Bremsventils (3) (St4) durchgeführt werden.

## Claims

1. Driver brake valve (3) for a compressed air brake system (1) of a utility vehicle (7),
the driver brake valve (3) being controllable by a brake pedal (2) and being provided for outputting an analog driver brake pressure (p1) and an electrical sensor data signal (S1) on the basis of the actuation of the brake pedal (2),
the driver brake valve (3) having a compressed air inlet (3a) for connection to a system pressure (p0), a compressed air outlet (3b) for connecting a brake control line (5), and a sensor (18) for determining an actuation of the brake pedal (2),
**characterized in that**
- the brake valve (3) has a characteristic curve storage device (21) having stored characteristic curve data (KL) and a determination device (20),
- the sensor (18) is designed to generate an actuation signal (S5) on the basis of the actuation of the brake pedal (2),
- the determination device (20) is designed to generate the sensor data signal (S1) from the actuation signal (S5) on the basis of the characteristic curve data (KL) stored in the characteristic curve memory (21), and
- the stored characteristic curve data (KL, P-SW) and/or the sensor data signal (S1) comprise a non-linear relationship between a controlled driver brake pressure (p1) and/or a signal value (t_PWM) and an adjustment path (sw) of the brake pedal (2).

2. Driver brake valve (3) according to claim 1, **characterized in that** the determination device (20) is designed to generate and output the sensor data signal (S1) as a linear dependency of the driver brake pressure (p1) on the adjustment path (sw).

3. Driver brake valve (3) according to either claim 1 or claim 2, **characterized in that** the sensor data signal (S1) represents a dependency of the driver brake pressure (p1) output by the brake valve (3) on the adjustment path (sw) of the brake pedal (2).

4. Driver brake valve (3) according to any of the preceding claims **characterized in that** the characteristic curve data (KL, P-SW) stored in the characteristic curve memory (21) are formed by calibration of the brake valve (3) and measurement of the output driver brake pressure (p1).

5. Driver brake valve (3) according to any of the preceding claims, **characterized in that** the sensor data signal (S1) is a PWM Signal (PWM), a pulse width (t_PWM) of the PWM Signal (PWM) being proportional to the controlled driver brake pressure (p1).

6. Driver brake valve (3) according to any of the preceding claims **characterized in that** the characteristic curve data (KL, P-SW) have at least two linear regions (Vb1, Vb2) having different gradients (SL1, SL2), which are associated with the spring stiffnesses of two springs (32a, 32b) of a spring device (32) of the driver brake valve (3) or the brake pedal (2), or linearly simulate a non-linear spring characteristic in portions.

7. Driver brake valve (3) according to any of the preceding claims, **characterized in that** the characteristic curve data (KL) have fixed points (FP-i) as value tuples, e.g. value pairs, for interpolation of the characteristic curve (KL) and/or for interpolation of fixed points (FP-i).

8. Driver brake valve (3) according to any of the preceding claims, **characterized in that** the sensor (18) is a position sensor, in particular a Hall sensor (18) for determining the adjustment path (sw) of an actuating device (6) connected to or activated by the brake pedal (2) for adjusting a passage cross section (33) of the driver brake valve (3).

9. Compressed air brake system (1) for a utility vehicle (7), comprising:
- a brake pedal (2),
- a driver brake valve (3) according to any of the preceding claims, which can be controlled by the brake pedal (2),
- at least one brake circuit (22) having at least one wheel brake (14) and a check valve device (11, 12),
- a brake pressure control line (5) for conducting or guiding the analog driver brake pressure (p1) to the brake circuit (22), and
- a brake control device (8) for receiving the sensor data signal (S1) and outputting control signals (S2, S3).

10. Compressed air brake system (1) according to claim 9,
**characterized in that** an activation device (10) is provided between the brake pressure control line (5) and the brake circuit (22), which, alternatively, connects the brake pressure control line (5) or a system pressure (p0) to the brake circuit (22), the activation device (10) being controllable by an activation signal (S4) from the brake control device (8) on the basis of a driver-independent external or internal brake request signal (XBR, RSC).

11. Method for operating a driver brake valve (3) according to any of claims 1 to 8, comprising at least the following steps:
connecting a system pressure (p0) to a compressed air inlet (3a) of the driver brake valve (3) and a compressed air sensor (52) to a compressed air outlet (3b) of the driver brake valve (3) (St1), **characterized by** successively adjusting an actuator (50) (St2) and measuring, by means of the pressure sensor (52), the plurality of adjustment values (Sw-i) of the adjustment path (sw) as actuation signals (S5) of the sensor (18), and also the driver brake pressure values (p1-i) of the driver brake pressure (p1) that are output at the compressed air outlet (3b) by the driver brake valve (3) at the adjustment values (Sw-i) of the adjustment path (sw) (St3), forming a characteristic curve (KL, P-SW) from the adjustment values (Sw-i) and pressure values (p1-i) and storing the characteristic curve (KL, P-SW) in the characteristic curve memory (21) of the brake valve (3) (St4).

12. Method according to claim 11, **characterized in that** the characteristic curve is stored as fixed points (FP-i) which are formed as or from value tuples of the adjustment values (Sw-i) of the adjustment path (sw) and the driver brake pressure values (p1-i) of the driver brake pressure (p1) (St4).

13. Method according to either claim 11 or claim 12, **characterized in that** the connection of a system pressure (p0) to the compressed air inlet (3a) of the driver brake valve (3) and of the compressed air sensor (52) to a compressed air outlet (3b) of the driver brake valve (3) takes place before or as part of a leak test after the production of the driver brake valve (3) (St1), and
the further steps (St2, St3, St4) of the successive adjustment of an actuator (50) (St2), and the measurement (St3) and the formation and storage of the characteristic curve (KL, P-SW) in the characteristic curve memory (21) of the brake valve (3) (St4) are subsequently carried out.

## Revendications

1. Valve de freinage de conducteur (3) pour un système de freinage à air comprimé (1) d'un véhicule utilitaire (7),
dans laquelle la valve de freinage de conducteur (3) peut être commandée par une pédale de frein (2) et est prévue pour délivrer une pression analogique de freinage de conducteur (p1) et un signal utile de capteur électrique (S1) en fonction de l'actionnement de la pédale de frein (2),
dans laquelle la valve de freinage de conducteur (3) présente une entrée d'air comprimé (3a) destinée à être raccordée à une pression du système (p0), une sortie d'air comprimé (3b) destinée au raccordement d'une conduite de commande de freinage (5), et un capteur (18) destiné à la détermination d'un actionnement de la pédale de frein (2),
**caractérisée en ce que**
- la valve de freinage (3) présente un dispositif de mémoire de courbes caractéristiques (21), comportant des données de courbes caractéristiques (KL) mémorisées et un dispositif de détermination (20),
- le capteur (18) est conçu pour générer un signal d'actionnement (S5) en fonction de l'actionnement de la pédale de frein (2),
- le dispositif de détermination (20) est conçu pour générer le signal utile de capteur (S1) à partir du signal d'actionnement (S5) en fonction des données de courbes caractéristiques (KL) mémorisées dans la mémoire de courbes caractéristiques (21), et
- les données de courbes caractéristiques (KL, P-SW) mémorisées et/ou le signal utile de capteur (S1) présentent une relation non linéaire entre une pression de freinage de conducteur (p1) commandée et/ou une valeur de signal (t_PWM) et la course de réglage (sw) de la pédale de frein (2).

2. Valve de freinage de conducteur (3) selon la revendication 1,
**caractérisée en ce que** le dispositif de détermination (20) est conçu pour générer et délivrer le signal utile de capteur (S1) comme dépendance linéaire de la pression de freinage de conducteur (p1) par rapport à la course de réglage (sw).

3. Valve de freinage de conducteur (3) selon la revendication 1 ou 2,
**caractérisée en ce que** le signal utile de capteur (S1) reflète une dépendance de la pression de freinage de conducteur (p1) délivrée par la valve de freinage (3) par rapport à la course de réglage (sw) de la pédale de frein (2).

4. Valve de freinage de conducteur (3) selon l'une des revendications précédentes, **caractérisée en ce que** les données de courbes caractéristiques (KL, P-SW) mémorisées dans la mémoire de courbes caractéristiques (21) sont formées par étalonnage de la valve de freinage (3) et par mesure de la pression de freinage de conducteur (p1) délivrée.

5. Valve de freinage de conducteur (3) selon l'une des revendications précédentes, **caractérisée en ce que** le signal utile de capteur (S1) est un signal PWM (PWM), dans laquelle une largeur d'impulsion (t_PWM) du signal PWM (PWM) est proportionnelle à la pression de freinage de conducteur (p1) commandée.

6. Valve de freinage de conducteur (3) selon l'une des revendications précédentes, **caractérisée en ce que** les données de courbes caractéristiques (KL, P-SW) présentent au moins deux zones linéaires (Vb1, Vb2) comportant des pentes différentes (SL1, SL2) associées aux rigidités élastiques de deux ressorts (32a, 32b) d'un dispositif à ressort (32) de la valve de freinage de conducteur (3) ou de la pédale de frein (2) ou reproduisent, de façon linéaire par sections, une courbe caractéristique de ressort non linéaire.

7. Valve de freinage de conducteur (3) selon l'une des revendications précédentes, **caractérisée en ce que** les données de courbes caractéristiques (KL) présentent des points fixes (FP-i) comme un tuple de valeurs, p. ex. des paires de valeurs, pour l'interpolation des courbes caractéristiques (KL) et/ou pour l'interpolation de points fixes (FP-i).

8. Valve de freinage de conducteur (3) selon l'une des revendications précédentes, **caractérisée en ce que** le capteur (18) est un capteur de course, en particulier un capteur à effet Hall (18) pour la détermination de la course de réglage (sw) d'un dispositif d'actionnement (6) activé par ou relié à la pédale de frein (2) pour le réglage d'une coupe transversale de passage (33) de la valve de freinage de conducteur (3).

9. Système de freinage à air comprimé (1) pour un véhicule utilitaire (7), présentant :
- une pédale de frein (2),
- une valve de freinage de conducteur (3), selon l'une des revendications précédentes, pouvant être commandée par la pédale de frein (2),
- au moins un circuit de freinage (22) comportant au moins un frein de roue (14) et un dispositif à valve d'arrêt (11, 12),
- une conduite de commande de pression de freinage (5) destinée à acheminer ou à guider la pression analogique de freinage de conducteur (p1) au circuit de freinage (22), et
- un dispositif de commande de freinage (8) destiné à recevoir le signal utile de capteur (S1) et délivrer des signaux de commande (S2, S3).

10. Système de freinage à air comprimé (1) selon la revendication 9, **caractérisé en ce qu'**un dispositif de mise en circuit (10) est prévu entre la conduite de commande de pression de freinage (5) et le circuit de freinage (22), lequel dispositif de mise en circuit connecte alternativement la conduite de commande de pression de freinage (5) ou une pression du système (p0) au circuit de freinage (22),
dans lequel le dispositif de mise en circuit (10) peut être commandé par un signal de mise en circuit (S4) émis par le dispositif de commande de freinage (8) en fonction d'un signal de demande de freinage externe ou interne (XBR, RSC) indépendant du conducteur.

11. Procédé de fabrication d'une valve de freinage de conducteur (3) selon l'une des revendications 1 à 8, comprenant au moins les étapes suivantes :
raccordement d'une pression du système (p0) à une entrée d'air comprimé (3a) de la valve de freinage de conducteur (3) et d'un capteur d'air comprimé (52) à une sortie d'air comprimé (3b) de la valve de freinage de conducteur (3) (St1), **caractérisé par** le réglage d'un actionneur (50) (St2) suivi par la mesure des nombreuses valeurs de réglage (Sw-i) de la course de réglage (sw) comme signal d'actionnement (S5) du capteur (18) d'une part et, d'autre part, par le capteur de pression (52) (St3), des valeurs de pression de freinage de conducteur (p1-i) de la pression de freinage de conducteur (p1), lesquelles valeurs de pression sont délivrées par la valve de freinage de conducteur (3) au niveau de la sortie d'air comprimé (3b) pour les valeurs de réglage (Sw-i) de la course de réglage (sw),
la formation d'une courbe caractéristique (KL, P-SW) à partir des valeurs de réglage (Sw-i) et des valeurs de pression (p1-i) et la mémorisation de la courbe caractéristique (KL, P-SW) dans la mémoire de courbes caractéristiques (21) de la valve de freinage (3) (St4).

12. Procédé selon la revendication 11, **caractérisé en ce que** la courbe caractéristique est mémorisée comme points fixes (Fp-i) formés sous forme ou à partir de tuples de valeurs des valeurs de réglage (Sw-i) de la course de réglage (sw) et des valeurs de pression de freinage de conducteur (p1-i) de la pression de freinage de conducteur (p1) (St4).

13. Procédé selon la revendication 11 ou 12, **caractérisé en ce que** le raccordement d'une pression du système (p0) à l'entrée d'air comprimé (3a) de la valve de freinage de conducteur (3) et du capteur d'air comprimé (52) à une sortie d'air comprimé (3b) de la valve de freinage de conducteur (3) est effectué (St1) avant ou dans le cadre d'un test d'étanchéité après la fabrication de la valve de freinage de conducteur (3) et
par la suite, les étapes supplémentaires (St2, St3, St4) successives de réglage d'un actionneur (50) (St2), de mesure (St3) et de formation et mémorisation de la courbe caractéristique (KL, P-SW) dans la mémoire de courbes caractéristiques (21) de la valve de freinage (3) (St4) sont réalisées.
